# EUROPEAN PATENT APPLICATION

(11) **EP 2 293 164 A1**
(43) Date of publication of application: **09.03.2011**
(21) Application number: 09169021.4
(22) Date of filing: 31.08.2009
(51) Int. Cl.: G05B 19/418, G05B 23/02

(54) **Cloud computing for a process control and monitoring system**

(71) Applicant: ABB Research Ltd., 8050 Zürich (CH)
(72) Inventor: Husain, Bazmi, 8032 Zürich (CH); Ganz, Christopher, 8046 Zürich (CH); Naedele, Martin, 8050 Zürich (CH); Schierholz, Ragnar, 4052 Basel (CH)
(74) Representative: ABB Patent Attorneys

(57) **Abstract**

Redundancy of a process monitoring system 210 is achieved by performing some or all of the computer applications of the process monitoring system 210 in a cloud computing facility 260. If one of the cloud computing nodes 258 of the cloud computing facility 260 fails, due to the cloud computing abilities of the cloud computing facility 260, other nodes 258 of the cloud computing facility 260 may take over the function of the failed cloud computing node 258.

## Description

### FIELD OF THE INVENTION

The invention relates to a process monitoring system, a method of monitoring a process, a program element for monitoring a process and a computer-readable medium, in which the program element is stored.

### BACKGROUND OF THE INVENTION

Large distributed primary systems like electric power systems, water and gas supply systems or telecommunication systems may have SCADA systems for monitoring and controlling their behaviour. A human operator normally sits in the control room of the SCADA system and monitors different parameters of the primary system. In case of an event, such as an emergency, the operator may influence the behaviour of the primary system with the aid of the SCADA system.

A SCADA system or more generally a process monitoring system, which additionally may monitor and control the primary system on a level on which no human operator needs to interfere, requires large amounts of computing resources. For example, the SCADA system may have to gather data from a multitude of sensing and control units, may have to process and condense these data and may have to create control commands to be sent to remote field devices. Further, the SCADA system may have to prepare the data in such a way that a human operator is capable of monitoring it.

Due to reasons of security, a SCADA system or process monitoring system may require multiple redundancies. Redundancy of a SCADA system may be provided by adding another device for each primary device that is to be redundant and for the desired level of redundancy, replicating the functionality of the primary device in case of a failure of the primary device. The number of devices required to achieve full redundancy may be therefore equal to the number of devices in the system times the desired level of redundancy. For example, a typical SCADA system may comprise four redundant server networks at two geographically separated locations. The SCADA system may be connected to the real-time sensing and control units in the substations by means of remote communication lines.

### DESCRIPTION OF THE INVENTION

It is an object of the invention to monitor processes in a fail-save way.

This object is solved by the subject-matter of the independent claims. Exemplary embodiments of the invention are evident from the dependent claims.

A first aspect of the invention relates to a process monitoring system.

According to an embodiment of the invention, the process monitoring system comprises a cloud computing facility with a plurality of distinct and interactive cloud computing nodes, wherein the cloud computing facility is adapted to execute an application of the process monitoring system, the application being adapted for monitoring a primary system.

Redundancy of a process monitoring system is achieved by performing some or all of the computer applications of the process monitoring system in a cloud computing facility. If one of the cloud computing nodes of the cloud computing facility fails, due to the cloud computing abilities of the cloud computing facility other nodes of the cloud computing facility may take over the function of the failed cloud computing node.

The primary system monitored by the process monitoring system may be an electrical power system, a water distribution system, a gas distribution system or a telecommunication system. Generally, the primary system may be a large scale technical facility with a multitude of distributed components. The process monitoring system may monitor the primary system by receiving sensor and control data from the distributed components and by further processing this data.

Cloud computing may be a style of computing in which dynamically scalable and/or virtualized resources are provided as a service over a network, for example the Internet. A user of the cloud computing abilities of the cloud computing facility, for example a user that run an application within the cloud computing facility, may not have to need the knowledge of controlling, monitoring or maintaining the technical infrastructure of the cloud computing facility.

A cloud computing facility may have a higher failure safety than providing a redundant device for each device to be made more fail-save. In the case of only one single redundant device, if the redundant device has a failure, no redundancy may be left. Despite of this, a cloud computing facility may comprise a plurality of cloud computing nodes, that all are adapted to take over the functionality of the other cloud computing nodes. Thereby, a cloud computing facility may provide a very high level of redundancy.

By using a cloud computing facility for execution of application of a SCADA system, this may provide a new way of architecting a SCADA system and a new kind of SCADA system topology having very high redundancy and therefore fail safety.

The proposed system may use cloud computing principles and middleware to dynamically provide computation and storage capacity to a SCADA system.

According to an embodiment of the invention, the primary system comprises at least one process execution device, for example a plurality of process execution devices. The process execution devices may be remote from the cloud computing facility. A process execution device may be a sensor, an actuator or a control unit of a sensor or an actor. For example, a process execution device may be a field device together with its local controllers and its communication devices. The process monitoring system may be adapted to monitor the process execution device by gathering data, for example by receiving the data from the communication devices of the process execution device and by further processing this data.

The monitoring of a process monitoring system may also comprise controlling the primary system. For example, the process monitoring system may generate control commands that are sent to the process execution devices or components of the primary system.

According to an embodiment of the invention, the cloud computing facility is connected to the primary system over a network. The cloud computing facility is adapted to receive control and sensor data from the primary system. The application executed by the cloud computing facility is adapted to process this data and further may be adapted to generate control commands. The cloud computing facility may be adapted to send these control commands back to the primary system or to components of the process monitoring system.

According to an embodiment of the invention, the plurality of cloud computing nodes comprises a first cloud computing node and a second cloud computing node, wherein the first and second cloud computing nodes are remote from each other. For example, the cloud computing facility is not limited to a single building, but may comprise technical equipment distributed over at least two buildings. For example, the cloud computing facility may be two computer centres, located at different geographic locations and being connected by a network, like the Internet. In this case, even if the complete technical equipment of one location, for example due to a power failure, fails, the technical equipment and cloud computing nodes at the other location may take over the functionality of the failed technical equipment at the first location. In this case, the cloud computing nodes may be distributed over at least two locations.

The cloud computing nodes, for example servers, may be located remote from the other components of the process monitoring system or the primary system, which may be located in an unclean process environment.

According to an embodiment of the invention, the cloud computing facility comprises a redundant computing node. A redundant computing node may, for example, be a computer that, if all of the other computing nodes of the cloud computing facility are operating properly, is not operating. For example, the redundant computing node or redundant computer may be switched off, when it is not operating. In case, one or more of the computing nodes of the computing facility fail, the redundant computing node will start operation, for example by simply be switched on, and will take over the functionality of one or more failed computing nodes.

For example, a redundant computing node may be provided by a scalable cloud computing facility. Scalability may be a property of a system which indicates its ability to either handle growing amounts of work or its ability to be enlarged. For example, scalability may be the capability of the cloud computing facility to increase a total throughput of an increased load when resources, for example hardware or computers, are added.

To achieve redundancy, any cloud computing node in the system may take over the functionality of a failed node. The number of nodes that may be required, therefore may depend on the required robustness against failures. Protection against a single node failure may be already achieved by adding one single redundant or stand-by cloud computing node to the computing cloud, which is adapted to take over any failed cloud computing nodes functionality. Multiple failures may also be tolerated by appropriately adding stand-by nodes. If the system is implemented hardware independent, functionality may even be taken over by other running cloud computing nodes, reducing spare capacity by providing full functionality of a graceful degradation of functionality in case of a failed cloud computing node without additional hardware in the system. The advantage of this system may lie in a flexible redundancy, capacity and/or graceful degradation model, where redundancy and capacity may even be added when required, i.e. by adding cloud computing nodes to the system in case of maintenance.

According to an embodiment of the invention, the cloud computing facility is adapted to virtualize the execution of the application. Virtualization of an application within the cloud computing facility may be the hiding of the physical technical characteristics of the computing equipment and devices used by the cloud computing facility to the outside or to a user, for example the process monitoring system. A process monitoring system using the cloud computing facility may not have to be aware of the physical and technical characteristics of the cloud computing facility. For example, the cloud computing facility may simulate a single computer or a single processor on which the application is executed. For the other components of the process monitoring system only this single simulated processor or single simulated computer is present. Therefore, it is not necessary that the other components of the process monitoring may be adapted to cope with the redundancy of the cloud computing facility.

According to an embodiment of the invention, the application is adapted for storing data of the process monitoring system. If the data of the process monitoring system is stored in a cloud computing facility, the data may be stored in a redundant, failsafe way, for example, in a database executed in the cloud computing facility, and the redundancy for storing data can be provided by the cloud computing facility.

According to an embodiment of the invention, the process monitoring system further comprises a network being adapted for transmitting data. The network may be a data network, for example the Internet. The primary system may be connected to the cloud computing facility over the network, wherein the network may be adapted to transmit data with a network protocol that may be a standard network protocol. Further, the primary system and the cloud computing facility may be adapted to communicate with each other via the network protocol. Enhanced fail safety for the process monitoring system may be provided, if a redundant network, like the Internet, which is safe with respect to failures of components of the network is be used. All the components of the process monitoring system may be adapted to communicate over the redundant network. For example, not only the primary system and the cloud computing facility may use the network but also a plurality of computing nodes of the cloud computing facility, in particular the first and second computing node, may communicate with each other over the network via the network protocol.

According to an embodiment of the invention, the process monitoring system comprises a process execution device protocol converter, wherein the process execution device protocol converter is adapted for converting data from a protocol of a process execution device into the network protocol. For example, a process execution device may be a certain control unit remote from the cloud computing facility. The remote control unit may be adapted to communicate with other field devices in its vicinity with a local field bus or simply with the aid of analogue signals. To communicate with the process monitoring system, the local control device sends its data, for example encoded in the field bus protocol, to the process execution device protocol converter. The process execution device protocol converter then converts this data into the network protocol, for example the Internet protocol and then sends this data over the network to the cloud computing facility. This may have the advantage that the primary system may comprise several local communication networks that are all connected to the cloud computing facility over a large scale network, like the Internet.

According to an embodiment of the invention, the process execution device protocol converter is connected on one side to the process execution device and on another side to the network.

According to an embodiment of the invention, the process monitoring system further comprises a first operator station, wherein the cloud computing facility is adapted to communicate with the first operator station over the network. The or a application executed by the cloud computing facility may be adapted for controlling a human machine interface of the first operator station.

Also, the operator station may be remote from other components of the process monitoring system. The operator station and the cloud computing facility may be adapted to communicate with each other via the network protocol of the network.

A human machine interface (HMI) may be a device or apparatus which is adapted to present process data of the process monitoring system to a human operator, and with which the human operator may monitor and control the process.

According to an embodiment of the invention, the process monitoring system further comprises a second operator station, which, for example due to safety reasons may be remote from the first operator station. The cloud computing facility may be adapted to communicate over the network with the second operator station, wherein the or a application execute by the cloud computing facility may adapted for controlling the first operator station and the second operator station such that if the first operator station has a failure, or may become disconnected from the network, the second operator station takes over the function of the first operator station.

According to an embodiment of the invention, the process monitoring system further comprises an operator station protocol converter. The operator station protocol converter is adapted for converting data from a protocol of the first and/or second operator station into the network protocol. In other words, the operator station may comprise a protocol converter that is connected on one side to the other components of the operator station and on another side to the network. Components of the operator station may communicate with each other over a proprietary protocol, wherein the operator station may communicate to the cloud computing facility, to the other operator station or further components of the process monitoring system over a large scale network with a single protocol.

According to an embodiment of the invention, the process monitoring system may be a SCADA system of the primary system. SCADA may stand for supervisory control and data acquisition which may generally refer to an industrial or technical supervising, monitoring and/or control system. For example, the process may be the process of an electrical power system, a water distribution system, a gas distribution system or a telecommunication system or in general a large scale technical facility with geographically distributed components.

Dedicated on-site equipment for the SCADA system may only comprise protocol converters for input channels which can not be transparently distributed over the network connecting the site with the one or more cloud data centers. The SCADA applications and history storages may be executed on local or remote, owned or rented cloud computing nodes, which may provide dynamic capacity and redundancy with cost/performance/fold-tolerance trade of.

According to an embodiment of the invention, the primary system is an electrical power system.

A further aspect of the invention relates to a method of monitoring a process.

According to an embodiment of the invention, the method comprises the step of: monitoring primary system with an application executed in a cloud computing facility, for example a facility as described in the above and the following.

All the method steps described with respect to the process monitoring system may also be embodiments of the method of monitoring a process and vice versa.

A further aspect of the invention relates to a computer-readable medium. In the computer-readable medium a computer program for monitoring a process stored, which, when being executed by a processor, is adapted to carry out the method of monitoring a process as described below and above.

For example, the cloud computing facility may comprise at least one processor associated with one of its computing nodes that is adapted to execute the program element. Alternatively, or additionally the cloud computing facility may simulate a virtual processor for executing the application. In this way, the program element may be executed by several processors simultaneously.

A computer-readable medium may be a floppy disk, a hard disk, an USB (Universal Serial Bus) storage device, a CD, a DVD, a RAM (Random Access Memory), a ROM (Read Only memory) and an EPROM (Erasable Programmable Read Only Memory). A computer readable medium may also be a data communication network, e.g. the Internet, which allows downloading a program code.

According to an embodiment of the invention, the computer program may comprise the application for monitoring the primary system. Further, the computer program may be executed at least partially within the cloud computing facility. It may be possible that parts of the computer program are executed by the computing nodes of the cloud computing facility and other parts of the computer program are executed in other devices, for example the computer devices of the operator station.

A further aspect of the invention relates to a program element for monitoring a process, which, when being executed by a processor, is adapted to carry out the method for monitoring a process as described below and above.

### BRIEF DESCRIPTION OF THE DRAWINGS

The subject matter of the invention will be explained in more detail in the following text with reference to exemplary embodiments which are illustrated in the attached drawings.
Fig. 1 schematically shows the architecture of a process monitoring system.
Fig. 2 schematically shows aspects of the architecture of the process monitoring system of Fig. 1.
Fig. 3 shows a schematic diagram of applications or program modules of a process monitoring system that may be executed by a cloud computing facility according to an embodiment of the invention.
Fig. 4 shows a schematic diagram of the architecture or topology of a process monitoring system according to an exemplary embodiment of the invention.
Fig. 5 shows a flow diagram of a method for monitoring a process or primary system according to an exemplary embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

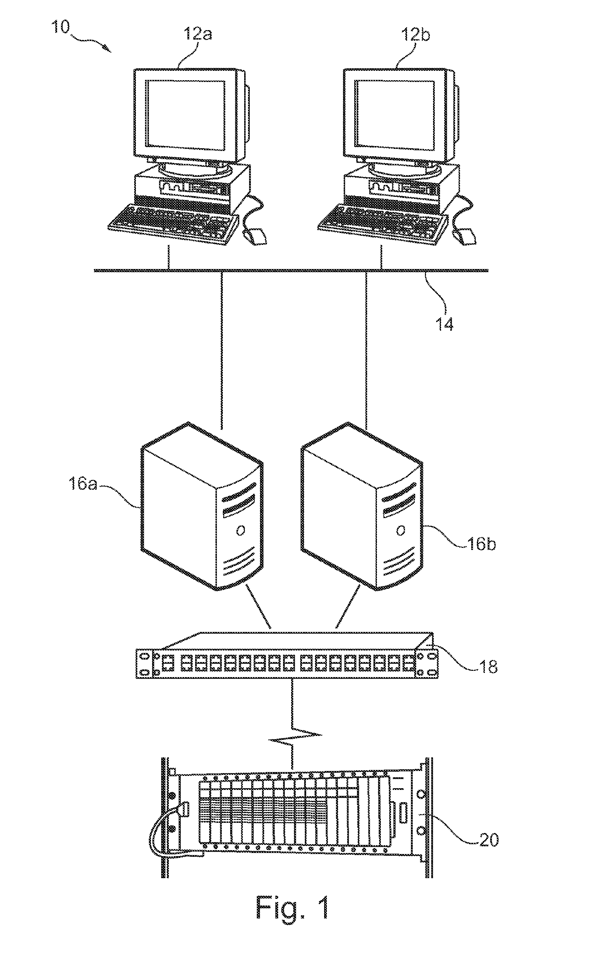

Fig. 1 shows a process monitoring system 10. Two application servers 12a and 12b are connected over a network 14 with two redundant process communication units 16a and 16b. The application servers 12a, 12b and the process communication units 16a, 16b are all computers and devices which may be situated remote from each other.

The process communication units 16a and 16b are connected to a remote communication manager 18, a device that is adapted to communicate with a remote terminal unit (RTU) 20 or SCS system 20. The remote communication manager (RCM) 18 may be adapted to convert data from and to the process communication units 16a, 16b into a protocol that may be processed by the RTU 20. The process communication units 16a, 16b are responsible and adapted for protocol translation, time synchronization and RCM communication with the RCM 18.

The remote communication manager 18 and the remote terminal unit 20 may be components of a primary system, for example an electrical power system.

The process communication units 16a and 16b are interfaces between a front end of the primary system, i.e. the remote communication manager 18 and the remote terminal unit 20, and the network 14. The process communication units 16a, 16b are adapted for communicating via the RSP (remote socket protocol) protocol to the application servers 12a and 12b. The process communication units 16a, 16b are further adapted to load their databases from the application servers 12a, 12b over the network 14. There may be up to 64 multi-drop lines to the RTUs 20 per process communication unit 16a, 16b and up to 16 channels per RCM 18. The communication protocols for each line are configurable. Further various communication medias may be used. A distributed configuration is supported and the whole system has a redundancy on different levels.

The front end comprising the remote terminal unit 20 and the process communication units 16a, 16b is adapted to communicate with the electrical power system and to collect data and send control commands.

The process communication units 16a, 16b are adapted for data acquisition from the RTU 20 or the SCS system 20. The units 16a, 16b may facilitate a real-time supervisory control of power stations, sub-stations, key information points in a distributed power network and a phasor meter communication (PMU). The units 16a, 16b may further facilitate the development of process communication, for example by interfacing RTUs, PMUs, SA- and IED-systems, the use of standardized protocols, the use of WAN instead of leased lines to the station. This deregulation may lead to flexibility and versatility. Further the process communication units 16a, 16b provide IT-security by secure data communications and redundant solutions.

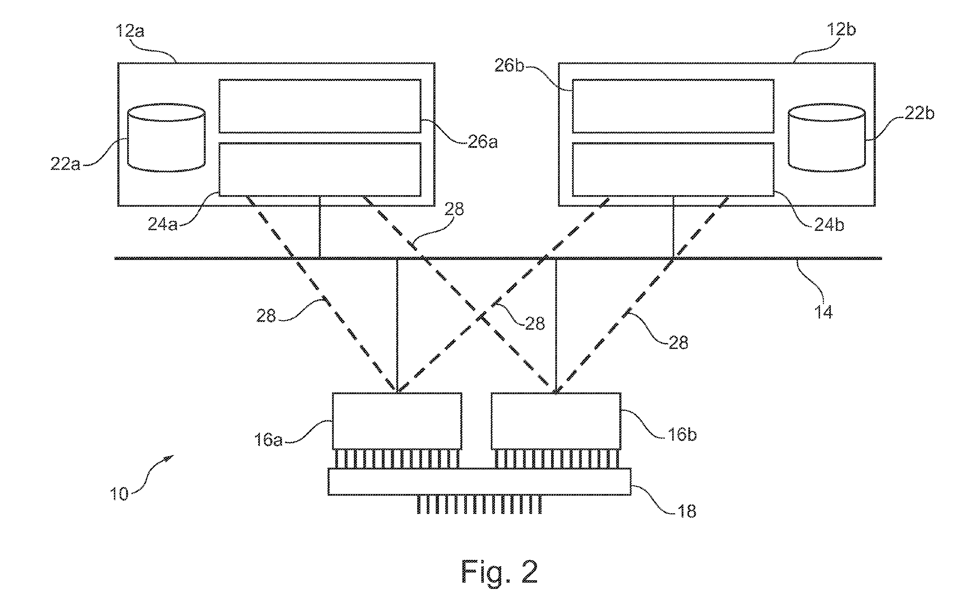

Fig. 2 shows further aspects of the system 10 of Fig. 1. The data network 14, which may be a LAN or WAN, provides the data communication between the process communication units 16a, 16b and the application servers 12a and 12b. Each of the application servers 12a, 12b is adapted to execute a real-time database 22a, 22b, a RCS (remote control socket) application 24a, 24b and further SCADA applications 26a, 26b.

The RCS application 24a, 24b is a component of the application server 12a, 12b and is adapted for supervising the connection from the application server 12a, 12b to the process communication units 16a, 16b. For this, each RCS application 24a, 24b has a RSP (remote socket protocol) link 28 to each of the remote communication units 16a, 16b. A RCS application 24a, 24b handles the line switch over and the redundant lines, interfaces the SCADA applications 26a, 26b, performs communication statistics, handles telephone connections and modem pools, is responsible for scaling of measurements and the database loading to the process communication units 16a, 16b.

The RCS application 24a, 24b is the RSP master of the RSP link 28. On the other hand the process communication unit 16a, 16b is the RSP slave of the RSP link 28.

The system that may comprise the process monitoring system 10 contains domain controllers that hold and manage user accounts and security settings, SCADA servers, for example the application servers 12a, 12b, that supervise and control the power system, UDW/PI servers that hold historical data for the power system, PCUs 16a, 16b that collect data from the RTUs 18, and workstations that provide work places for operators, engineers and administrators. Optionally, such a system may comprise training simulators and network devices and support servers (for instance backup/restore servers).

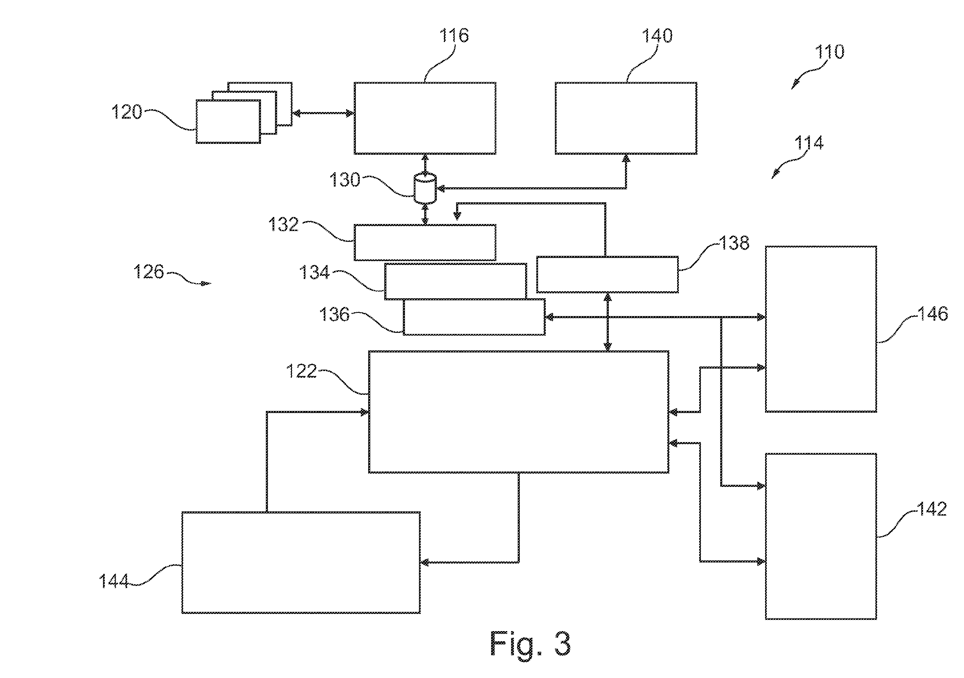

Fig. 3 shows a schematic diagram of the different software modules and components of a SCADA system 110. The arrows in the diagram show the basic data flow between the different components of the SCADA system 110.

The front end of the SCADA system 110 comprises a plurality of RTUs connected to a PCU 116. The PCU 116 communicates over the RTUs 120 with a primary system, like an electrical power system. The PCU 116 collects data and sends control commands.

All the communication of the SCADA system 110 indicated by the arrows in Fig. 3 may be done over a data network, like the Internet 114.

The PCU 116 is connected over a communication link 130 with SCADA processing modules 126. The SCADA processing modules comprise an alarm and event processing module 132, a command handling module 134, a data subscription module 136, a calculations and control programs (APL) module 138. The SCADA processing modules 126 are adapted to receive data from the PCU 116 that has been collected by the PCU from the primary system. Further the SCADA processing modules 126 are adapted to generate and send control commands to the PCU 116, which transmit them further to the RTUs 120 to control the primary system.

Further an inter-center communication (ICC) module 140 is connected to the component 130. The inter-center communication module 140 allows multiple control centers to be connected and to control overlapping parts of the primary system.

The SCADA processing modules or applications 126 are adapted to communicate with a database 122 that stores data of the SCADA system 110 in tables and queues and ensures that data is available in a redundant manner. Further, the SCADA applications 126 are adapted to communicate with a historian module 146 for saving data for long-time periods and making this data available for calculations and viewing by a human operator. The SCADA applications 126 are further adapted to communicate with a HMI (human machine interface) module 142 which is adapted to control an operator station which allows human operators to supervise, monitor and control the primary system. Other applications 144 may have access to the database 122.

The modules and applications described below and above may be implemented as programmed software modules, in particular as software modules that may be executed in a cloud computing facility of the SCADA system 110. However, one skilled in the art will understand that these modules, at least some of these modules, may be implemented fully or partially in hardware, for example as devices.

Further, it has to be understood that the modules and applications described below and above may be executed or run in devices which are large distances remote from each other and which are adapted to communicate with each other over the network 114.

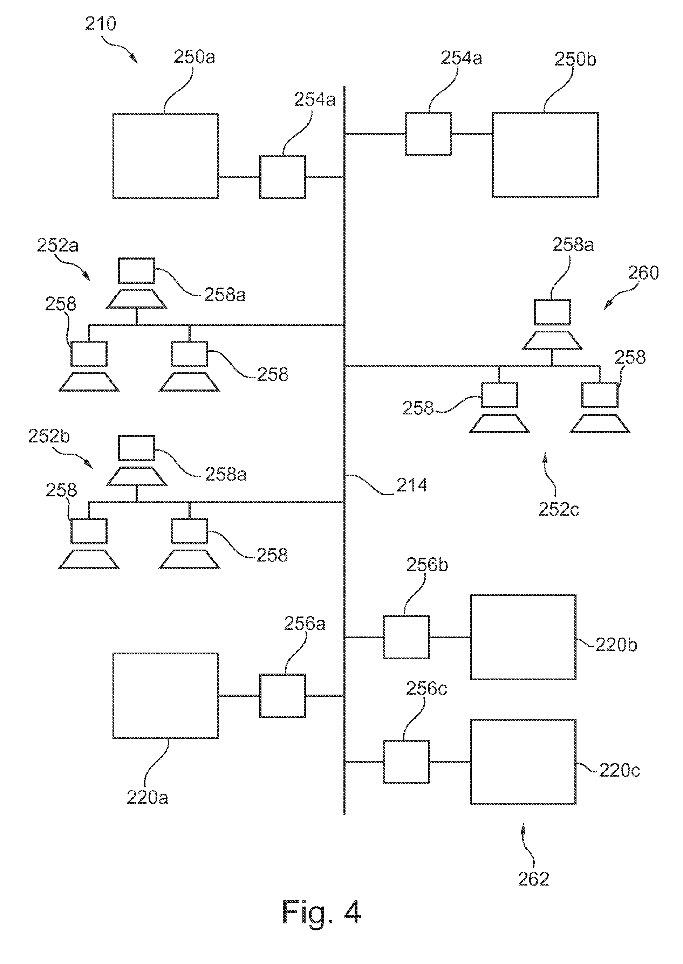

Fig. 4 shows a schematic diagram of the architecture or topology of a process monitoring system 210, for example a SCADA system 210. The components of the SCADA system 210 are connected with each other over a network 214 which is adapted to transmit data with the aid of a standard protocol, for example the Internet.

Connected to the network 214 are two operator stations 250a, 250b, three remote terminal units 220a, 220b, 220c and three data centers 252a, 252b, 252c. Two protocol converters 254a, 254b are used for converting the protocol used by the operator stations 250a, 250b into the network protocol of the network 214. Further three protocol converters 256a, 256b, 256c are used for converting the protocol used by the remote terminal units 220a, 220b, 220c, for example a field bus protocol, into the network protocol of the network 214.

The RTUs 220a, 220b, 220c are components of a primary system 262 that is monitored by the process monitoring system 210 or SCADA system 210.

Each of the data centers 252a, 252b, 252c comprises a plurality of cloud nodes 258. Each of the cloud nodes 258 may be a server or standard PC comprising at least one processor for executing applications or software modules. Each of the data centers 252a, 252b and 252c comprises a redundant computing node 258a that is only used to perform calculations, if one of the other cloud computing nodes 258 has a failure.

The data centers 252a to 252c may be buildings housing the computers and the technical equipment for supporting the cloud computing nodes 258, 258a. The data centers 252a to 252c, due to reasons of safety, may be far remote from each other and may only be connected over the network 214. All the data centers 252a, 252b, 252c are part of a cloud computing facility 260.

All or some of the modules and applications shown in Fig. 3 and described in the abobe and the below may be executed by the cloud computing facility 260. However, some of these modules and applications may also be executed by one of the other devices shown in Fig. 4. For example, the database 122 and the SCADA applications 126 may be executed by the cloud computing facility 260 and the HMI module 142 may be executed by components of the operator stations 250a, 250b.

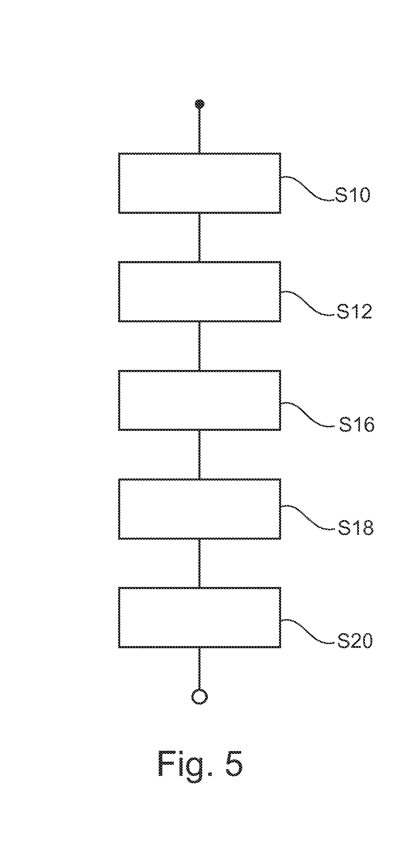

Fig. 5 shows a flow diagram of a method of monitoring a primary system.

In step S10 sensor data is collected by one of the RTUs 220a, 220b, 220c and send via a field bus protocol to one of the protocol converters 256a, 256b, 256c. The protocol converter 256a, 256b, 256c converts the data into the network protocol and transmits the data over the network 214 to the cloud computing facility 260.

In step S12, the cloud computing facility 260 receives the data and processes the data.

In step S16, the processed data is then sent over the network 214 to the protocol converters 254a, 254b. There, the data is converted from the network protocol into the protocol of the operator stations 250a, 250b and sent to the operator stations 250a, 250b. There, the data is displayed to a human operator which then can watch and supervise the primary system 262 based on the data.

In step S18, the human operator in one of the operator stations 250a decides to change the behaviour of the primary system 262 and advises the operator stations 250a to send a control command to the cloud computing facility 260 over the network 214. In step S20, the applications or modules executed by the cloud computing facility 260 process this command and transforms the command into commands that are processable by the primary system 262. The command is then sent to the RTUs 220a, 220b, 220c over the network 214.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: process monitoring system
- 12a, 12b: application server
- 14: network
- 16a, 16b: process communication unit (PCU)
- 18: remote communication manager (RCM)
- 20: remote terminal unit (RTU)
- 22a, 22b: database
- 24a, 24b: RCS application
- 26a, 26b: SCADA application
- 28: RSP link
- 110: SCADA system
- 114: network
- 116: PCU
- 120: RTU
- 122: database
- 126: SCADA application
- 130: communication link
- 132: alarm and event processing
- 134: command handling
- 136: data subscription
- 138: calculations/APL
- 140: inter-center communication
- 142: HMI
- 144: applications
- 146: historian module
- 210: process monitoring system
- 214: network
- 220a-220c: RTU
- 250a,250b: operator station
- 252a-252c: data center
- 254a, 254b: protocol converter
- 256a-256c: protocol converter
- 258: cloud computing node
- 258a: redundant cloud computing node
- 260: cloud computing facility
- 262: primary system

## Claims

1. A process monitoring system (210) for monitoring and/or controlling an industrial primary system or process (262), comprising:
a cloud computing facility (260) with a plurality of distinct and interactive cloud computing nodes (258),
wherein the cloud computing facility (260) is adapted to execute an application (122, 126, 142) of the process monitoring system (210),.

2. The process monitoring system (210) of claim 1,
wherein the plurality of cloud computing nodes (258) comprises a first cloud computing node and a second cloud computing node,
wherein the first and second cloud computing nodes are remote from each other.

3. The process monitoring system (210) of claim 1,
wherein the cloud computing facility (260) comprises a redundant computing node (258a).

4. The process monitoring system (210) of claim 1,
wherein the cloud computing facility (260) is adapted to virtualize the execution of the application (126).

5. The process monitoring system (210) of claim 1,
wherein the application (122) is adapted for storing data of the process monitoring system (210).

6. The process monitoring system (210) of claim 1, further comprising:
a network (214),
wherein the primary system (262) is connected to the cloud computing facility (260) over the network (214),
wherein the network (214) is adapted to transmit data with a network protocol,
wherein the primary system (262) and the cloud computing facility (260) are adapted to communicate with each other via the network protocol.

7. The process monitoring system (210) of claim 6, further comprising:
a process execution device protocol converter (256a),
wherein the process execution device protocol converter is adapted for converting data from a protocol of a process execution device into the network protocol.

8. The process monitoring system (210) of claim 6, further comprising:
a first operator station (250a);
wherein the cloud computing facility (260) is adapted to communicate with the first operator station (250a) over the network (214),
wherein the application (142) is adapted for controlling a human machine interface of the first operator station (250a).

9. The process monitoring system (210) of claim 8, further comprising:
a second operator station (254b),
wherein the cloud computing facility (260) is adapted to communicate over the network (214) with the second operator station (250b),
wherein the application (140) is adapted for controlling the first operator station (250a) and the second operator station (250b) such that, if the first operator station (25a) has a failure, the second operator station (250b) takes over the function of the first operator station (250a).

10. The process monitoring system (210) of claim 8, further comprising:
an operator station protocol converter (254a),
wherein the operator station protocol converter is adapted for converting data from a protocol of the first operator station (250a) into the network protocol.

11. The process monitoring system (210) of one of the preceding claims,
wherein the process monitoring system is a SCADA system (210) of the primary system, wherein the primary system comprises a plurality of geographically distributed sites, and wherein different cloud computing nodes are assigned to different sites.

12. The process monitoring system (210) of claim 11,
wherein the primary system (262) is an electrical power system.

13. A method of monitoring a process, the method comprising the step of:
Monitoring a primary system (262) with an application executed in a cloud computing facility (260).

14. A computer-readable medium, in which a computer program for monitoring a process is stored, which, when being executed by a processor, is adapted to carry out the step of the method of claim 13.

15. A program element for monitoring a process, which, when being executed by a processor, is adapted to carry out the step of the method of claim 13.
